# FASCICULE DE BREVET EUROPEEN

(11) **EP 3 755 933 B1**
(45) Date de publication et mention de la délivrance du brevet: **12.01.2022**
(21) Numéro de dépôt: 19705179.0
(22) Date de dépôt: 18.02.2019
(51) Int. Cl.: F16L 27/108, F16L 27/11, F16L 27/111, F16L 51/02, F16L 51/03

(54) **COMPENSATEUR AVEC ENSEMBLE DE SECOURS ET PROCÉDÉ CORRESPONDANT**
KOMPENSATOR MIT SICHERUNGSANORDNUNG UND ENTSPRECHENDES VERFAHREN
COMPENSATOR WITH BACKUP ASSEMBLY AND CORRESPONDING METHOD

(30) Priorité: 19.02.2018 FR 1851374
(43) Date de publication de la demande: 30.12.2020
(73) Titulaire: FIVES NORDON, 54000 Nancy (FR)
(72) Inventeur: CARLU, Etienne, 54000 NANCY (FR); GRADOT, Olivier, 54000 NANCY (FR)
(74) Mandataire: Lavoix
(86) Numéro de dépôt international: PCT/EP2019/053917
(87) Numéro de publication internationale: WO 2019/158739

(56) Documents cités:
- GB-A- 954 479
- GB-A- 2 348 935
- US-A- 2 014 355

## Description

L'invention est relative au domaine des compensateurs de dilatation, également appelés joints de dilatation. Elle concerne plus particulièrement des compensateurs montés sur des installations dont les contraintes d'exploitation rendent difficile la dépose des compensateurs pour leur remplacement.

Les compensateurs de dilatation raccordent une tuyauterie en amont à une tuyauterie en aval. Ils permettent de compenser, entre leur côté en amont et leur côté en aval, les mouvements relatifs de deux tronçons de tuyauteries, et/ou des équipements qui leur sont associés. Ils permettent également d'assurer une continuité de l'enveloppe étanche du réseau, lequel peut être à la pression atmosphérique, sous pression ou sous vide.

Les mouvements relatifs à compenser peuvent être axiaux (dans l'axe du compensateur), latéraux (perpendiculaires à l'axe du compensateur), angulaires, ou une combinaison de ces mouvements.

Les compensateurs comportent un élément absorbant, par allongement ou compression, des mouvements relatifs décrits ci-dessus. Cet élément absorbant peut être constitué, par exemple, d'une membrane élastique ou d'un soufflet. Un soufflet permet de compenser un mouvement important en limitant l'encombrement axial du compensateur. Dans le cas des tuyauteries industrielles, les soufflets sont la plupart du temps en alliages métalliques, et ce, pour des raisons liées aux conditions de service, notamment la pression et la température du fluide transporté. Dans la suite de ce document, nous utiliserons par commodité le terme « soufflet » pour désigner tout élément absorbant le mouvement entre les conduits en amont et en aval, sans que ce terme ne limite davantage la portée des revendications.

En service, à la suite de dommages par fatigue, corrosion, érosion ou vieillissement thermique, par exemple, des fuites peuvent apparaître sur les soufflets ou sur les soudures et raccords avoisinants.

Des solutions préventives existent. Ainsi US 3 472 062 décrit une solution qui consiste à utiliser des soufflets multicouches. Les couches multiples composent un seul soufflet et se déforment ensemble lorsque le soufflet est déformé. Dans le cas de la fuite d'une des parois, la ou les parois non fuyante(s) assure(nt) la résistance et l'étanchéité du composant. Une autre solution préventive est divulguée par le document US 2014355 qui montre un compensateur de sécurité comprenant un soufflet double concentrique.

Des solutions curatives sont possibles. Des réparations localisées des soudures ou des changements de soufflets peuvent être réalisés. Sans démontage complet des appareils, l'ajout d'un nouveau soufflet se fait nécessairement par la reconstitution par soudage de ce dernier, sur site, à partir de secteurs d'un soufflet préalablement formé puis découpé en secteurs. Cette méthode a pour conséquences différents inconvénients, dont les plus importants sont une tenue en fatigue diminuée, non prévisible par le calcul, et un temps de mise en oeuvre important. Les prescriptions des codes et normes en termes de géométrie de cordons de soudure sont difficilement respectées ou tenues du fait des difficultés induites lors de l'assemblage par soudage des secteurs préformés. Il est également très difficile de réaliser les contrôles volumiques radiographique ou ultrasonore qui sont prescrits par les règlementations sur les soudures longitudinales entre secteurs. US 3 927 818 présente une méthode de reconstitution de soufflet à partir de secteurs soudés sur site.

Un but de la présente invention est de pallier ces problèmes en tout ou partie.

A cet effet, l'invention a pour objet un compensateur comprenant :
- une manchette en amont prévue pour être connectée de manière étanche à un conduit en amont,
- une manchette en aval prévue pour être connectée de manière étanche à un conduit en aval, et
- un soufflet reliant de manière étanche la manchette en amont et la manchette en aval,
   dans lequel le compensateur comprend en outre un ensemble de secours comportant un soufflet de secours, l'ensemble de secours étant adapté pour passer d'un état de repos, dans lequel l'ensemble de secours n'est pas connecté de manière étanche à au moins l'une de la manchette en amont et de la manchette en aval, à un état de travail, dans lequel l'ensemble de secours est connecté de manière étanche à la manchette en amont et à la manchette en aval.

Selon des modes particuliers de réalisation, le compensateur comprend l'une ou plusieurs des caractéristiques suivantes, prises isolément ou selon toutes les combinaisons techniquement possibles :
- l'ensemble de secours est adapté pour passer de l'état de repos à l'état de travail après une opération de maintenance réalisée in situ, pendant laquelle la manchette en amont et la manchette en aval sont destinées à rester connectées de manière étanche respectivement au conduit en amont et au conduit en aval ;
- dans l'état de repos, l'ensemble de secours est connecté de façon étanche à une seule quelconque de la manchette en amont et de la manchette en aval ;
- entre l'état de repos et l'état de travail de l'ensemble de secours, le soufflet de secours occupe deux positions distinctes par rapport à la manchette en amont et à la manchette en aval ;
- le soufflet de secours est adapté pour subir une déformation plastique par extension lors du passage de l'ensemble de secours de l'état de repos à l'état de travail ;
- le compensateur comprend en outre au moins un point de raccordement permettant de raccorder un ou plusieurs dispositifs mécaniques au compensateur, les dispositifs mécaniques étant destinés à réaliser la déformation plastique du soufflet de secours ;
- le point de raccordement est positionné sur le soufflet de secours ;
- l'ensemble de secours comprend au moins un élément mobile, l'élément mobile étant mobile entre une première position par rapport aux manchettes amont et aval dans l'état de repos, et une seconde position, occupée dans l'état de travail et dans laquelle l'élément mobile relie la manchette en amont et la manchette en aval ;
- l'élément mobile est télescopique ;
- le compensateur comprend au moins un dispositif adapté pour faire circuler un gaz dans un volume situé entre le soufflet et l'ensemble de secours, la circulation du gaz étant destinée à être réalisée lors du passage de l'état de repos à l'état de travail ; et
- le compensateur comprend un dispositif adapté pour réaliser un test d'étanchéité dans un volume situé entre le soufflet et l'ensemble de secours, le test d'étanchéité étant destiné à être réalisé après passage de l'état de repos à l'état de travail.

L'invention a aussi pour objet un procédé de maintenance de maintenance d'un compensateur tel que décrit ci-dessus, comprenant au moins une opération pour connecter l'ensemble de secours de manière étanche à la manchette en amont et à la manchette en aval, l'opération étant réalisée *in situ* sans déconnecter la manchette en amont et la manchette en aval respectivement du conduit en amont et du conduit en aval.

Selon des modes particuliers de réalisation, le procédé comprend l'une ou plusieurs des caractéristiques suivantes, prises isolément ou selon toutes les combinaisons techniquement possibles :
- le soufflet de secours est placé en lieu et place du soufflet après une dépose de ce dernier ;
- le second soufflet est déformé plastiquement par extension lors du passage de l'ensemble de secours de l'état de repos à l'état de travail pour connecter l'ensemble de secours de manière étanche à la manchette en amont et à la manchette en aval ; et
- un gaz circule dans un volume situé entre le soufflet et l'ensemble de secours lors du passage de l'état de repos à l'état de travail et/ou ensuite, afin d'assurer l'une ou plusieurs des fonctions suivantes : purge du volume, évacuation de gaz dangereux susceptibles de se trouver dans le volume, inertage du volume, limitation de l'arrivée de fluide procédé dans le volume, et refroidissement de pièces délimitant le volume, les pièces étant susceptibles de s'échauffer lors du passage de l'état de repos à l'état de travail.

Ainsi, les compensateurs sont munis d'un soufflet de secours préinstallé sur l'appareil. Ce soufflet est préservé des conditions de service avant son éventuelle mise en service en cas de fuite du soufflet ayant été mis en service en premier. Ces soufflets de secours sont ainsi dans un état neuf lors de leur mise en service. Est entendu par « neuf » le fait que les soufflets de secours n'auront pas travaillé en fatigue et n'auront pas été soumis à la température (absence de vieillissement thermique de l'alliage constitutif des soufflets), ni à la pression, ni aux impacts physico-chimiques (corrosion, adsorption-absorption et diffusion d'espèces chimiques nocives) liés au contact avec le fluide de service. Le soufflet de secours, tout comme le soufflet initial, peut être multicouche.

Ainsi, le soufflet de secours est conservé et raccordé ultérieurement en cas de besoin, par exemple après détection d'une fuite du soufflet principal ou après une période déterminée, en maintenance préventive. Leur raccordement permet de recouvrer, ou de conserver, l'étanchéité de la conduite.

Les améliorations apportées par ce soufflet de secours sont multiples. Il permet notamment un allongement de la durée de vie en fatigue du compensateur, car le soufflet de secours n'est pas soumis à fatigue et/ou vieillissement thermique avant sa mise en service contrairement aux systèmes multicouches à un seul soufflet. De plus, le soufflet de secours présente une morphologie et une compacité de cordon de soudure contrôlée et statuée conforme aux prescriptions des principaux codes et normes de constructions.

L'invention comprend optionnellement un certain nombre d'autres caractéristiques dont il sera plus explicitement question ci-après à propos d'exemples de réalisation décrits en référence aux dessins annexés, mais nullement limitatifs.

L'invention sera mieux comprise à la lecture de la description qui va suivre, donnée uniquement à titre d'exemple et faite en se référant aux dessins annexés.

On y décrit un compensateur selon l'invention, par exemple cylindrique de section circulaire. Ainsi, seule une demi-vue en coupe est représentée sur les figures.

Néanmoins, selon des variantes non représentées, des compensateurs selon l'invention peuvent avoir d'autres formes, et présenter par exemple une section carrée ou rectangulaire.

Sur les dessins annexés :
- la Fig. 1 est une représentation schématique d'un compensateur selon l'état de la technique ;
- la Fig. 2 est une représentation schématique d'un premier exemple de réalisation d'un compensateur selon l'invention, dans lequel l'ensemble de secours est représenté dans son état dit de repos ;

- la Fig. 3 est une représentation du compensateur de la Fig. 2, avec l'ensemble de secours placé dans son état dit de travail ;
- la Fig. 4 est une représentation schématique d'un second exemple de réalisation d'un compensateur selon l'invention, dans lequel l'ensemble de secours est représenté dans son état dit de repos ;
- la Fig. 5 est une représentation schématique d'un troisième exemple de réalisation d'un compensateur selon l'invention, dans lequel l'ensemble de secours est représenté dans son état dit de repos ;
- la Fig. 6 est une représentation schématique du compensateur de la Fig. 5, avec l'ensemble de secours placé dans son état dit de travail ;
- la Fig. 7 est une représentation schématique d'un quatrième exemple de réalisation d'un compensateur selon l'invention, dans lequel l'ensemble de secours est représenté dans son état dit de repos ;
- la Fig. 8 est une représentation schématique du compensateur de la Fig. 7, après la mise en place d'un moyen de traction permettant de déformer plastiquement un soufflet de secours ;
- la Fig. 9 est une représentation schématique du compensateur des Fig. 7 et 8, avec l'ensemble de secours placé dans son état dit de travail ;
- la Fig. 10 est une représentation schématique d'un cinquième exemple de réalisation d'un compensateur selon l'invention, dans lequel l'ensemble de secours est représenté dans son état dit de repos ;
- la Fig. 11 est une représentation schématique du compensateur de la Fig. 10, avec l'ensemble de secours placé dans son état dit de travail ;
- la Fig. 12 est une représentation schématique d'un sixième exemple de réalisation d'un compensateur selon l'invention, dans lequel l'ensemble de secours est représenté dans son état dit de repos ; et
- la Fig. 13 est une représentation schématique du compensateur de la Fig. 12, avec l'ensemble de secours placé dans son état dit de travail.

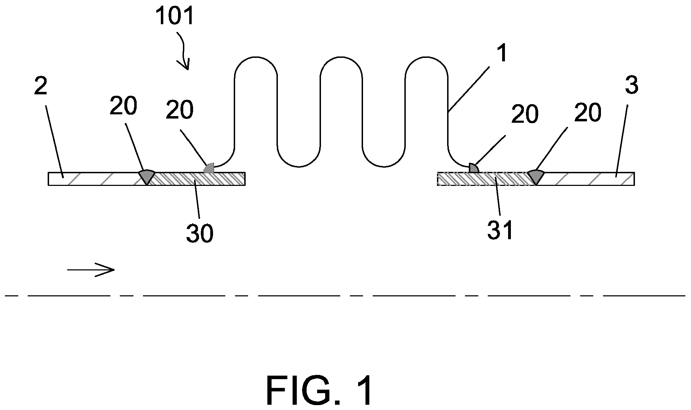

En se reportant au schéma de la Fig. 1, on peut voir schématiquement représenté un exemple de compensateur selon l'état de la technique. Le compensateur 101 est constitué d'une manchette en amont 30 raccordée à un conduit en amont 2 au moyen d'une soudure 20 étanche, d'une manchette en aval 31 raccordée à un conduit en aval 3 au moyen d'une autre soudure 20 étanche, et d'un soufflet 1 à trois ondes raccordé sur son extrémité en amont à la manchette en amont 30 au moyen d'une première soudure 20 étanche et sur son extrémité en aval à la manchette en aval 31 au moyen d'une seconde soudure 20 étanche. Ce compensateur est adapté pour compenser des déplacements relatifs principalement axiaux entre les conduits en amont et en aval 2, 3, mais il peut être adapté pour d'autres types de mouvements.

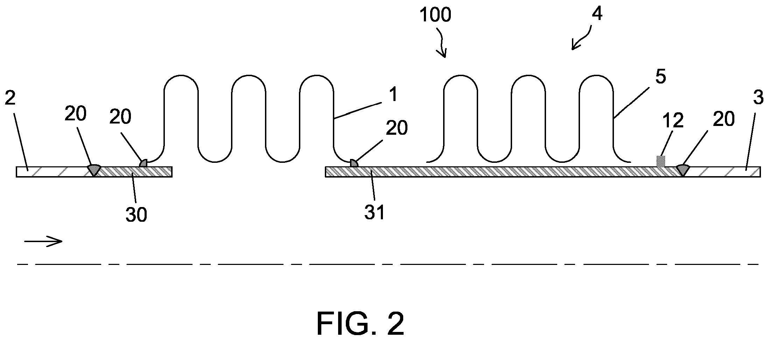

En se reportant à la Fig. 2, on peut voir schématiquement représenté un compensateur 100 selon un premier exemple de réalisation de l'invention.

Le compensateur 100 comprend une manchette en amont 30 raccordée à un conduit en amont 2 au moyen d'une soudure 20 étanche, une manchette en aval 31 raccordée à un conduit en aval 3 au moyen d'une autre soudure 20 étanche, et un soufflet 1 à trois ondes raccordé sur son extrémité en amont à la manchette en amont 30 au moyen d'une première soudure 20 étanche et sur son extrémité en aval à la manchette en aval 31 au moyen d'une seconde soudure 20 étanche.

La manchette en aval 31 est plus longue que selon l'état de la technique représenté sur la Fig. 1 afin de recevoir un soufflet de secours 5.

La manchette en aval 31 comprend également une buttée 12 permettant de maintenir le soufflet de secours 5 en position sur le compensateur 100 en bloquant son déplacement longitudinal en direction de la butée 12.

Le soufflet de secours 5 constitue, dans cet exemple, l'ensemble de secours 4 tel que décrit précédemment. Cet ensemble de secours 4 est représenté ici dans son état dit de repos. Aucune des deux extrémités du soufflet de secours 5 n'est raccordée à la manchette en amont 30, ni à la manchette en aval 31 du compensateur 100.

Si une fuite est détectée au niveau du soufflet 1 de première monte, celui-ci est retiré. L'assemblage du soufflet de secours 5 peut également être réalisé en l'absence de défaillance, à titre préventif, par exemple après que le soufflet est arrivé à un nombre prédéfini de cycles de déformation, par exemple à environ 90% d'un nombre de cycles de déformation garanti par le calcul.

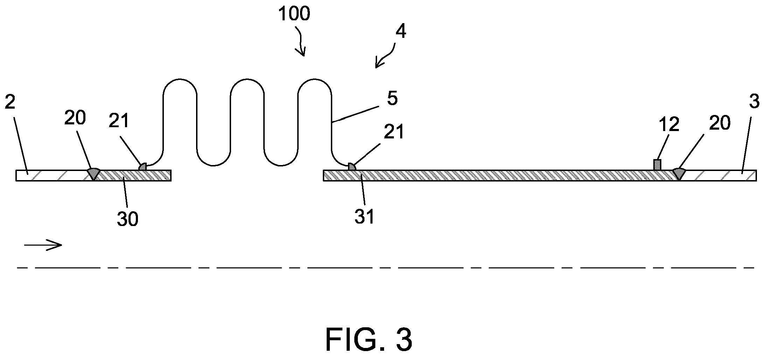

Cette opération consiste, par exemple, à découper *in situ* le soufflet 1 en deux morceaux par deux découpes longitudinales diamétralement opposées, par exemple à l'aide d'une disqueuse, puis à meuler les soudures aux extrémités du soufflet. Une fois le soufflet 1 retiré, le soufflet de secours 5 est déplacé axialement en lieu et place du soufflet 1 initialement présent et soudé à la manchette en amont 30 et à la manchette en aval 31 au moyen de soudures étanches 21, comme représenté sur la Fig. 3. Le soufflet de secours 5 est alors dans son état dit de travail.

L'ensemble de secours 4 est adapté pour passer de l'état de repos à l'état de travail par une opération de maintenance réalisée *in situ,* pendant laquelle la manchette en amont 30 et la manchette en aval 31 sont destinées à rester connectées de manière étanche respectivement au conduit en amont 2 et au conduit en aval 3.

Par « *in situ* », on entend par exemple que l'opération de maintenance est réalisée alors que le compensateur 100 est installé, c'est-à-dire connecté de manière étanche respectivement au conduit en amont 2 et au conduit en aval 3.

Ce premier exemple nécessite de déposer le soufflet 1 avant de mettre en service le soufflet de secours 5. Pour cela, il faut arrêter la circulation du fluide à l'intérieur des conduits 2, 3.

A contrario, les autres exemples présentés ci-après autorisent la mise en place du soufflet de secours sans arrêter la circulation du fluide, ce qui peut être particulièrement avantageux.

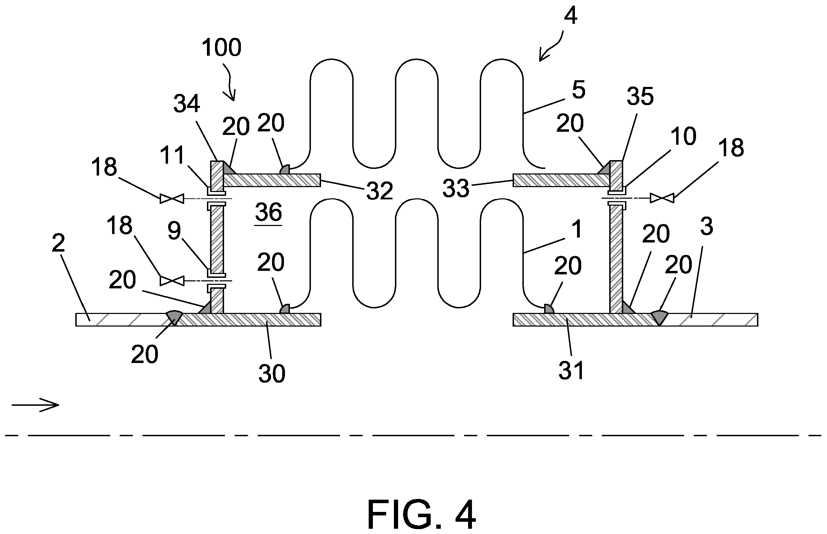

En se reportant à la Fig. 4, on peut voir schématiquement représenté un compensateur 100 selon un second exemple de réalisation de l'invention.

Ce compensateur 100 comprend une manchette en amont 30 raccordée à un conduit en amont 2 au moyen d'une soudure 20 étanche, une manchette en aval 31 raccordée à un conduit en aval 3 au moyen d'une autre soudure 20 étanche, et un soufflet 1 à trois ondes raccordé sur son extrémité en amont à la manchette en amont 30 au moyen d'une première soudure 20 étanche et sur son extrémité en aval à la manchette en aval 31 au moyen d'une seconde soudure 20 étanche.

Un soufflet de secours 5 est situé autour du soufflet 1 initialement présent. Le soufflet de secours 5 peut être installé autour ou à l'intérieur des attaches du compensateur (charnières, bras, couronne, par exemple). Le soufflet de secours 5 est ici représenté soudé sur son extrémité en amont sur une virole en amont 32 par une soudure étanche 20, de sorte qu'une seule soudure étanche est réalisée *in-situ,* à son extrémité en aval sur une virole en aval 33.

Les viroles en amont 32 et en aval 33 sont soudées de manière étanche sur des couronnes en amont 34 et en aval 35, elles-mêmes soudées de manière étanche sur les manchettes en amont 30 et en aval 31.

Le soufflet de secours 5, les deux viroles en amont et en aval 32, 33 et les deux couronnes en amont et en aval 34, 35 constituent, dans cet exemple, l'ensemble de secours 4 tel que décrit précédemment. Cet ensemble de secours 4 est représenté ici dans son état dit de repos. Il passera à son état dit de travail après que la soudure de l'extrémité en aval du soufflet de secours 5 sur la virole en aval 35 aura été réalisée *in situ.*

L'ensemble de secours 4 délimite un volume 36 autour du soufflet 1.

Au moins un raccordement 9 équipé d'une vanne d'isolement 18 permet d'alimenter ce volume 36 avec un fluide de balayage (non représenté), par exemple de l'air ou un gaz neutre. Ce raccordement 9 est représenté sur la Fig. 4 au niveau de la couronne en amont 34, mais il peut évidemment être situé ailleurs, par exemple sur l'une des viroles 32, 33. Un ou plusieurs raccordements 10 équipés d'une vanne d'isolement 18 peuvent également être présents pour évacuer tout ou partie du fluide de balayage. Ce raccordement 10 est représenté sur la Fig. 4 au niveau de la couronne en aval 35, mais il peut évidemment être situé ailleurs, par exemple sur l'une des viroles 32, 33.

Le fluide de balayage peut circuler en permanence, lorsque l'ensemble de secours 4 est dans son état de repos, afin, par exemple, d'éviter des dépôts à l'intérieur du volume 36, par exemple des poussières, ou l'accumulation d'un fluide dangereux dans ce volume, par exemple d'un fluide procédé circulant dans le conduit 2, 3 à la suite d'une fuite du soufflet 1. Ce fluide de balayage peut également être envoyé ponctuellement pour purger ou inerter le volume 36 avant de réaliser la soudure de l'extrémité en aval du soufflet de secours 5 sur la virole en aval 33.

Ce fluide de balayage circulant dans le volume 36 peut ainsi permettre :
- de purger ce volume situé entre le soufflet 1 et l'ensemble 4,
- d'évacuer des gaz dangereux susceptibles de se trouver dans ce volume,
- d'inerter ce volume par l'injection d'un gaz inerte,
- d'éviter ou diminuer l'arrivée de fluide procédé dans ce volume, particulièrement en cas de fuite du soufflet 1, et/ou
- de refroidir le soufflet de secours 5, les deux viroles en amont et en aval 32, 33 et les deux couronnes en amont et en aval 34, 35, susceptibles de s'échauffer lors de l'opération réalisée pour relier de manière étanche l'ensemble 4 aux deux conduits en amont 2 et en aval 3.

Au moins un raccordement 11, équipé d'une vanne d'isolement 18, peut également être prévu pour permettre un test d'étanchéité du volume 36 après l'opération réalisée sur site pour relier de manière étanche les deux conduits en amont 2 et en aval 3. Le test d'étanchéité peut par exemple comprendre l'envoi d'un gaz contenant de l'hélium dans le volume 36 par le raccordement 11, puis une recherche de la présence d'hélium autour du compensateur par une sonde adaptée.

Un isolant thermique, non représenté, peut être placé dans le volume 36 pour protéger le soufflet de secours 5 de la chaleur provenant du fluide en circulation dans le compensateur. Une isolation thermique, et/ou un écran mécanique, peuvent également être placés à l'extérieur du soufflet de secours 5 pour protéger celui-ci de l'environnement extérieur au compensateur.

De même, un fluide de protection peut être injecté dans le volume 36 afin d'empêcher ou de diminuer l'arrivée de fluide procédé dans ledit volume. Le débit du fluide de protection peut être consigné à une valeur fixe ou pilotée en pression, avec une pression de consigne supérieure à la pression du fluide transitant dans le compensateur.

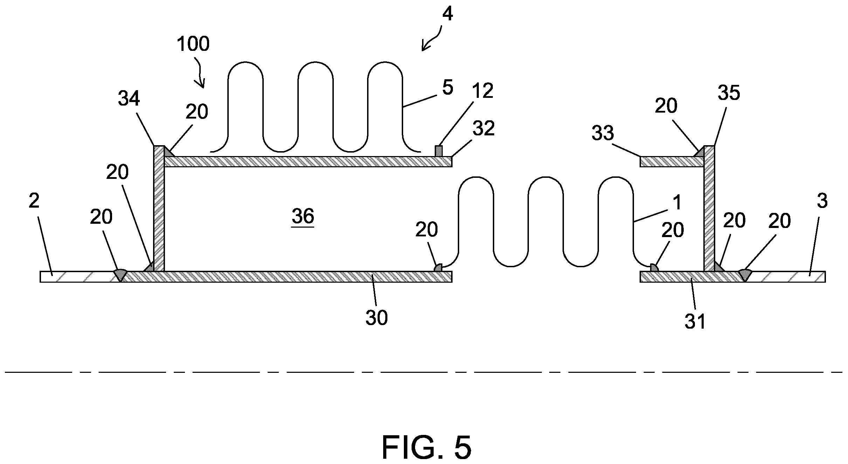

En se reportant à la Fig. 5, on peut voir schématiquement représenté un compensateur 100 selon un troisième exemple de réalisation de l'invention proche du précédent.

Dans cet exemple, le soufflet de secours 5 occupe une position en retrait dans son état dit de repos permettant d'avoir accès *in situ* au soufflet 1 initialement présent.

Cette configuration permet ainsi d'assurer facilement une surveillance visuelle de l'état du soufflet 1. Pour cela, un dispositif destiné à faciliter le contrôle visuel indirect en service du soufflet peut être installé initialement sur le compensateur. Il peut par exemple s'agir de guides permettant la mise en place d'une caméra en vidéoscope ou tout autre moyen permettant un contrôle visuel indirect ou tout autre contrôle non-destructif.

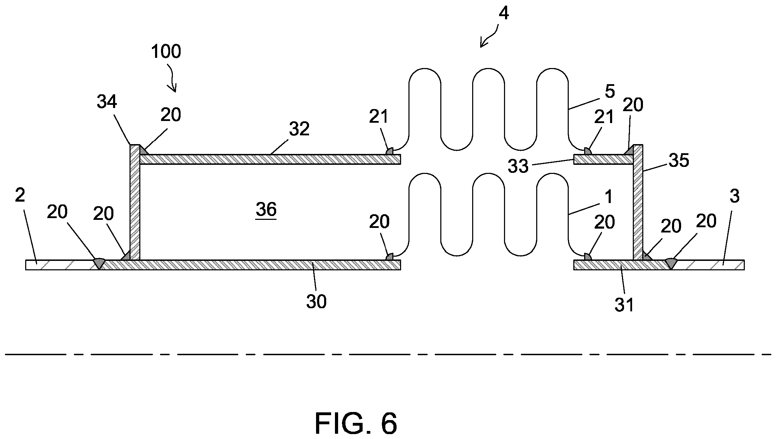

Une butée 12 permet de maintenir le soufflet de secours 5 dans sa position en retrait. Pour placer le soufflet de secours 5 dans son état de travail, la butée 12 est retirée, puis le soufflet de secours 5 est déplacé pour venir recouvrir l'ouverture située autour du soufflet 1 initialement présent, avant d'être soudé de manière étanche au deux viroles en amont 32 et en aval 33, comme représenté sur la Fig. 6.

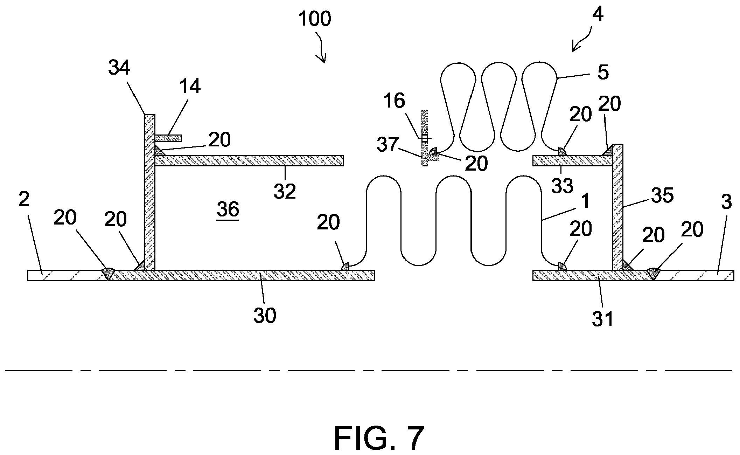

En se reportant à la Fig. 7, on peut voir schématiquement représenté un compensateur 100 selon un quatrième exemple de réalisation de l'invention.

Dans cet exemple, le soufflet de secours 5 est déformé *in situ* lors de son passage de son état de repos à son état de travail. Cette configuration permet de limiter l'encombrement du soufflet de secours 5 dans son état de repos. Cela permet notamment de laisser une ouverture pour une inspection visuelle du soufflet 1.

Dans son état de repos, le soufflet de secours 5 est soudé de manière étanche à l'une des viroles 32 ou33, ici la virole en aval 33. L'extrémité en amont du soufflet de secours 5 est soudée de manière étanche sur une couronne 37 équipée d'au moins un point d'accrochage 16 et plus avantageusement quatre ou huit points d'accrochage 16 répartis sur la circonférence de la couronne 37. Du côté de la couronne en amont 34 de l'ensemble de secours 4, un point d'accrochage 14 est placé au regard de chaque point d'accrochage 16 du soufflet de secours.

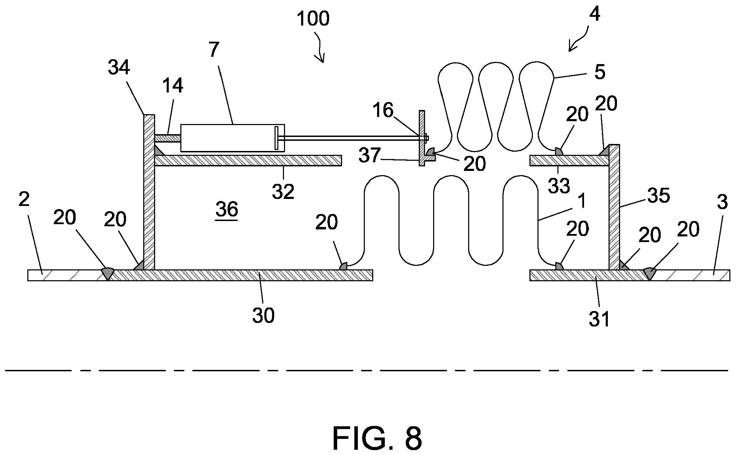

Comme représenté sur la Fig. 8, le soufflet de secours 5 est déformé longitudinalement par au moins un moyen de traction 7, ici un vérin, raccordé entre un point d'accrochage 14 sur la couronne en amont 34 et un point d'accrochage 16 sur l'extrémité en amont du soufflet de secours. Avantageusement, plusieurs moyens de traction 7 répartis sur la circonférence du soufflet sont utilisés pour déformer le soufflet de secours. La déformation du soufflet de secours 5 est, par exemple, plastique, élastique ou en partie plastique et en partie élastique.

Les moyens de traction 7 peuvent être des systèmes de vérinage ou de traction, par exemple. Ces dispositifs peuvent être passifs ou actifs. En cas de dispositifs actifs de type vérin, ou de dispositif utilisant un fluide sous pression, la pression de la conduite peut être utilisée comme force motrice du ou des dispositifs actifs, si la nature du fluide et le niveau de pression s'y prêtent.

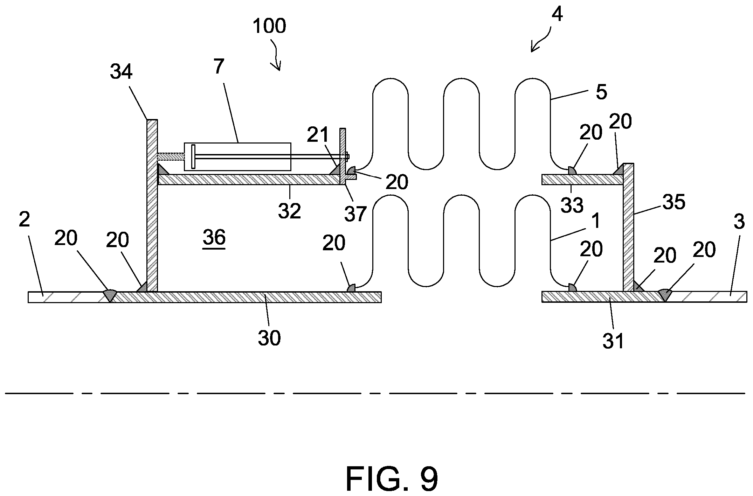

Comme représenté sur la Fig. 9, le soufflet de secours 5 est déformé plastiquement jusqu'à ce que la couronne 37 de l'extrémité en amont du soufflet de secours vienne en contact avec la virole 32 de l'ensemble de secours 4. Une soudure étanche 21 est alors réalisée entre la virole 32 et la couronne 37. Une fois cette soudure réalisée, l'ensemble de secours 4 se trouve dans son état dit de travail. Le dispositif de traction 7 peut alors être retiré.

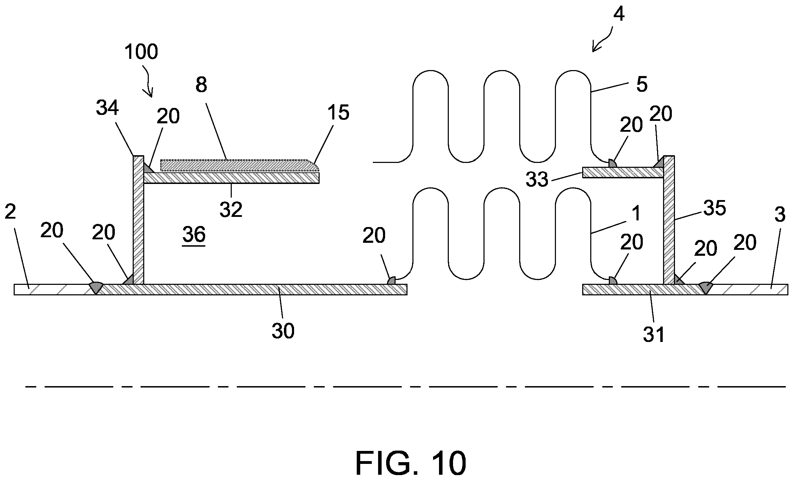

En se reportant à la Fig. 10, on peut voir schématiquement représenté un compensateur 100 selon un cinquième exemple de réalisation de l'invention.

Dans cet exemple, un élément mobile 8, sous la forme d'une virole, vient assurer la liaison entre le soufflet de secours 5 et la virole 32 de l'ensemble de secours 4. Cette virole mobile 8 permet notamment de laisser une ouverture pour une inspection visuelle du soufflet 1. L'extrémité en aval 15 de la virole mobile 8 située vers le soufflet de secours 5 a, par exemple, un profil incliné facilitant un ajustement radial de la position relative entre le soufflet de secours 5 et la virole mobile.

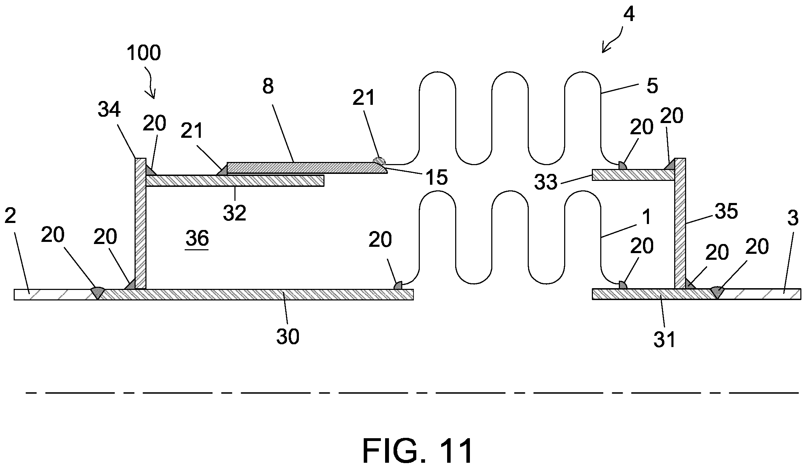

Comme représenté sur la Fig. 11, la virole mobile 8 est glissée axialement *in situ* jusqu'à venir en contact avec le soufflet de secours 5 pour faire passer celui-ci de son état de repos à son état de travail. Une première soudure étanche 21 est alors réalisée entre la virole mobile 8 et le soufflet de secours 5, et une seconde soudure étanche 21 est réalisée à l'autre extrémité de la virole mobile, entre celle-ci et la virole 32 de l'ensemble de secours 4. Une fois ces deux soudures réalisées, l'ensemble de secours 4 se trouve dans son état dit de travail.

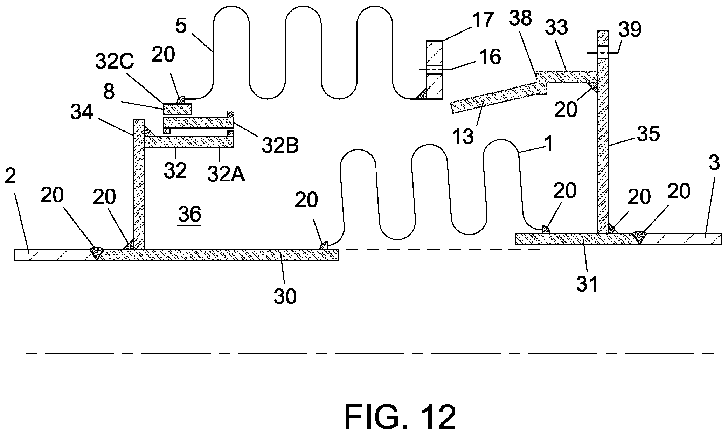

En se reportant à la Fig. 12, on peut voir schématiquement représenté un compensateur 100 selon un sixième exemple de réalisation de l'invention.

Un dispositif permettant de faciliter l'approche sur site des éléments à assembler peut être installé sur le compensateur ou à son voisinage immédiat. Il peut par exemple s'agir de guide linéaire glissière, ou de pièce conique 13 comme représenté sur la Fig. 12. Ces éléments sont particulièrement préconisés lorsque les conduits en amont et en aval ne sont pas alignés lors de la réparation. Il faut alors déformer le compensateur pour permettre une approche des éléments à assembler. Ces guides permettent de corriger un écart d'angle, un déplacement latéral ou axial par exemple.

Dans cet exemple de la Fig. 12, la virole 32 en amont de l'ensemble de secours 4 est télescopique. Elle est composée par exemple de trois viroles 32A, 32B, 32C superposées.

La virole 32A est fixe et soudée de manière étanche à la couronne en amont 34 de l'ensemble de secours 4.

Les viroles 32B et 32C constituent un élément mobile 8. Elles se déplacent longitudinalement pour permettre de refermer le volume 36 lors du passage de l'ensemble de secours 4 de son état de repos à son état de travail.

L'extrémité en amont du soufflet de secours 5 est raccordée par une soudure étanche à la virole extérieure mobile 32C. Son extrémité en aval comprend une couronne 17 équipé d'au moins un point de raccordement 16.

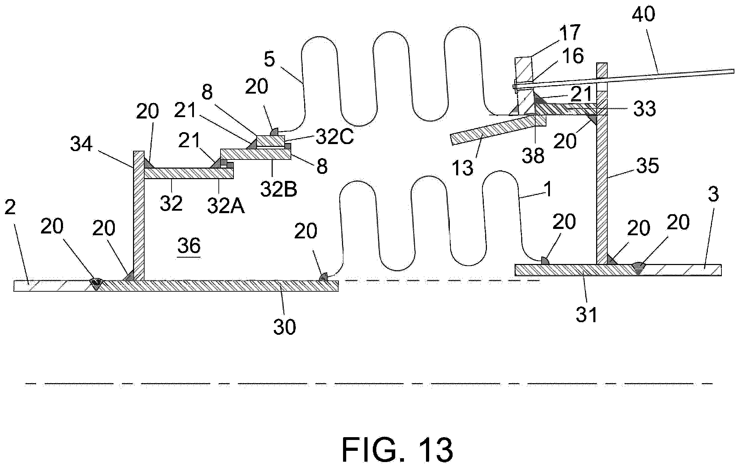

Comme représenté sur la Fig. 13, lorsqu'on souhaite faire passer l'ensemble de secours 4 de son état de repos à son état de travail *in situ,* un moyen de traction 40 est alors raccordé à un point d'accrochage 16 sur la couronne 17, ici en passant par un orifice 39 placé sur la couronne en aval 35. Avantageusement, plusieurs moyens de traction 14, raccordés à des points d'accrochage 16 répartis sur la circonférence du soufflet de secours 5, sont utilisés pour amener l'ensemble de secours 4 à sa position de travail.

La virole en aval 33 comprend une partie inclinée 13 permettant de guider la couronne 17 jusqu'à un épaulement 38. Cette configuration est notamment avantageuse lorsque le conduit en amont et le conduit en aval sont désaxés l'un par rapport à l'autre et que le compensateur 100 réalise une compensation latérale importante. Celle-ci conduit à une inclinaison du soufflet de secours 5 de quatre degrés dans l'exemple représenté sur la Fig. 13.

Une fois la couronne 17 en butée sur l'épaulement 38, des soudures étanches 21 sont réalisées entre la couronne 17 et la virole en aval 33, et entre les viroles en amont 32A, 32B, 32C. Une fois ces soudures réalisées, les moyens de traction 40 peuvent être retirés.

Dans les exemples de réalisation de l'invention présentés ici, les raccordements étanches du compensateur 100 avec les conduits en amont 2 et en aval 3 sont réalisés par soudage. Ils peuvent évidemment être réalisés par tout autre moyen connu en luimême de l'homme du métier, par exemple par un système à bride standard, un système à bride spéciale, ou par un système de bridage complété par une soudure d'étanchéité.

Grâce à leurs caractéristiques, tous les exemples de réalisation de l'invention décrits ci-dessus pallient au moins en partie les problèmes évoqués au début du présent document.

## Revendications

1. Compensateur (100) comprenant :
- une manchette en amont (30) prévue pour être connectée de manière étanche à un conduit en amont (2),
- une manchette en aval (31) prévue pour être connectée de manière étanche à un conduit en aval (3), et
- un soufflet (1) reliant de manière étanche la manchette en amont (30) et la manchette en aval (31),
**caractérisé en ce que** le compensateur (100) comprend en outre un ensemble de secours (4) comportant un soufflet de secours (5), l'ensemble de secours (4) étant adapté pour passer d'un état de repos, dans lequel l'ensemble de secours (4) n'est pas connecté de manière étanche à au moins l'une de la manchette en amont (30) et de la manchette en aval (31), à un état de travail, dans lequel l'ensemble de secours (4) est connecté de manière étanche à la manchette en amont (30) et à la manchette en aval (31).

2. Compensateur (100) selon la revendication 1, dans lequel l'ensemble de secours (4) est adapté pour passer de l'état de repos à l'état de travail après une opération de maintenance réalisée *in situ,* pendant laquelle la manchette en amont (30) et la manchette en aval (31) sont destinées à rester connectées de manière étanche respectivement au conduit en amont (2) et au conduit en aval (3).

3. Compensateur (100) selon la revendication 1 ou 2, **caractérisé en ce que**, dans l'état de repos, l'ensemble de secours (4) est connecté de façon étanche à une seule quelconque de la manchette en amont (30) et de la manchette en aval (31).

4. Compensateur (100) selon la revendication 1, **caractérisé en ce que**, entre l'état de repos et l'état de travail de l'ensemble de secours (4), le soufflet de secours (5) occupe deux positions distinctes par rapport à la manchette en amont (30) et à la manchette en aval (31).

5. Compensateur (100) selon la revendication 1, **caractérisé en ce que** le soufflet de secours (5) est adapté pour subir une déformation plastique par extension lors du passage de l'ensemble de secours (4) de l'état de repos à l'état de travail.

6. Compensateur (100) selon la revendication 5, comprenant en outre au moins un point de raccordement (16) permettant de raccorder un ou plusieurs dispositifs mécaniques (7, 40) au compensateur (100), les dispositifs mécaniques (7, 40) étant destinés à réaliser la déformation plastique du soufflet de secours (5).

7. Compensateur (100) selon la revendication 6, **caractérisé en ce que** le point de raccordement (16) est positionné sur le soufflet de secours (5).

8. Compensateur (100) selon la revendication 1, **caractérisé en ce que** l'ensemble de secours (4) comprend au moins un élément mobile (8), l'élément mobile (8) étant mobile entre une première position par rapport aux manchettes amont (30) et aval (31) dans l'état de repos, et une seconde position, occupée dans l'état de travail et dans laquelle l'élément mobile (8) relie la manchette en amont (30) et la manchette en aval (31).

9. Compensateur (100) selon la revendication 8, **caractérisé en ce que** l'élément mobile (8) est télescopique.

10. Compensateur (100) selon la revendication 1, **caractérisé en ce qu'**il comprend au moins un dispositif (9) adapté pour faire circuler un gaz dans un volume (36) situé entre le soufflet (1) et l'ensemble de secours (4), la circulation du gaz étant destinée à être réalisée lors du passage de l'état de repos à l'état de travail.

11. Compensateur (100) selon la revendication 1, **caractérisé en ce qu'**il comprend un dispositif (11) adapté pour réaliser un test d'étanchéité dans un volume (36) situé entre le soufflet (1) et l'ensemble de secours (4), le test d'étanchéité étant destiné à être réalisé après passage de l'état de repos à l'état de travail.

12. Procédé de maintenance d'un compensateur (100) selon l'une quelconque des revendications 1 à 11, comprenant au moins une opération pour connecter l'ensemble de secours (4) de manière étanche à la manchette en amont (30) et à la manchette en aval (31), l'opération étant réalisée *in situ* sans déconnecter la manchette en amont (30) et la manchette en aval (31) respectivement du conduit en amont (2) et du conduit en aval (3).

13. Procédé selon la revendication 12, **caractérisé en ce que** le soufflet de secours (5) est placé en lieu et place du soufflet (1) après une dépose de ce dernier.

14. Procédé selon la revendication 12, **caractérisé en ce que** le second soufflet (5) est déformé plastiquement par extension lors du passage de l'ensemble de secours (4) de l'état de repos à l'état de travail pour connecter l'ensemble de secours (4) de manière étanche à la manchette en amont (30) et à la manchette en aval (31).

15. Procédé selon la revendication 12, **caractérisé en ce qu'**un gaz circule dans un volume (36) situé entre le soufflet (1) et l'ensemble de secours (4) lors du passage de l'état de repos à l'état de travail et/ou ensuite, afin d'assurer l'une ou plusieurs des fonctions suivantes :
- purge du volume (36),
- évacuation de gaz dangereux susceptibles de se trouver dans le volume (36),
- inertage du volume (36),
- limitation de l'arrivée de fluide procédé dans le volume (36), et
- refroidissement de pièces délimitant le volume (36), les pièces étant susceptibles de s'échauffer lors du passage de l'état de repos à l'état de travail.

## Patentansprüche

1. Kompensator (100), umfassend:
- eine stromaufwärtige Manschette (30), die dazu bestimmt ist, dicht mit einer stromaufwärtigen Leitung (2) verbunden zu sein,
- eine stromabwärtige Manschette (31), die dazu bestimmt ist, dicht mit einer stromabwärtigen Leitung (3) verbunden zu sein, und
- einen Faltenbalg (1), der die stromaufwärtige (30) und stromabwärtige Manschette (31) dicht verbindet,
**dadurch gekennzeichnet, dass** der Kompensator (100) ferner eine Hilfseinheit (4) umfasst, umfassend einen Hilfsfaltenbalg (5), wobei die Hilfseinheit (4) angepasst ist, um von einem Ruhezustand, in dem die Hilfseinheit (4) nicht dicht mit mindestens einer von der stromaufwärtigen Manschette (30) und der stromabwärtigen Manschette (31) verbunden ist, in einen Arbeitszustand überzugehen, in dem die Hilfseinheit (4) dicht mit der stromaufwärtigen Manschette (30) und der stromabwärtigen Manschette (31) verbunden ist.

2. Kompensator (100) nach Anspruch 1, wobei die Hilfseinheit (4) angepasst ist, um nach einer *vor Ort* durchgeführten Wartung aus dem Ruhezustand in den Arbeitszustand versetzt zu werden, wobei die stromaufwärtige Manschette (30) und die stromabwärtige Manschette (31) dicht mit der stromaufwärtigen Leitung (2) bzw. der stromabwärtigen Leitung (3) verbunden bleiben sollen.

3. Kompensator (100) nach Anspruch 1 oder 2, **dadurch gekennzeichnet, dass** in dem Ruhezustand die Hilfseinheit (4) dicht mit einer von der stromaufwärtigen (30) und stromabwärtigen Manschette (31) verbunden ist;

4. Kompensator (100) nach Anspruch 1, **dadurch gekennzeichnet, dass** zwischen dem Ruhe- und dem Arbeitszustand der Hilfseinheit (4) der Hilfsfaltenbalg (5) zwei unterschiedliche Positionen in Bezug auf die stromaufwärtige (30) und stromabwärtige Manschette (31) einnimmt;

5. Kompensator (100) nach Anspruch 1, **dadurch gekennzeichnet, dass** der Hilfsfaltenbalg (5) angepasst ist, um einer plastischen Verformung durch Dehnung zu unterliegen, wenn die Hilfseinheit (4) aus dem Ruhezustand in den Arbeitszustand übergeht.

6. Kompensator (100) nach Anspruch 5, ferner umfassend mindestens einen Anschlusspunkt (16), der einen Anschluss einer oder mehrerer mechanischer Vorrichtungen (7, 40) an den Kompensator (100) ermöglicht, wobei die mechanischen Vorrichtungen (7, 40) dazu bestimmt sind, eine plastische Verformung des Hilfsfaltenbalgs (5) durchzuführen;

7. Kompensator (100) nach Anspruch 6, **dadurch gekennzeichnet, dass** der Anschlusspunkt (16) an dem Hilfsfaltenbalg (5) positioniert ist.

8. Kompensator (100) nach Anspruch 1, **dadurch gekennzeichnet, dass** die Hilfseinheit (4) mindestens ein bewegliches Element (8) umfasst, wobei das bewegliche Element (8) zwischen einer ersten Position in Bezug auf die stromaufwärtige (30) und stromabwärtige Manschette (31) in dem Ruhezustand und einer zweiten Position, die in dem Arbeitszustand eingenommen wird und in der das bewegliche Element (8) die stromaufwärtige Manschette (30) und die stromabwärtige Manschette (31) verbindet, beweglich ist.

9. Kompensator (100) nach Anspruch 8, **dadurch gekennzeichnet, dass** das bewegliche Element (8) teleskopisch ist.

10. Kompensator (100) nach Anspruch 1, **dadurch gekennzeichnet, dass** er mindestens eine Vorrichtung (9) umfasst, die angepasst ist, um ein Gas in einem Volumen (36) zwischen dem Faltenbalg (1) und der Hilfseinheit (4) zirkulieren zu lassen, wobei die Zirkulation des Gases während des Übergangs aus dem Ruhezustand in den Arbeitszustand erfolgen soll.

11. Kompensator (100) nach Anspruch 1, **dadurch gekennzeichnet, dass** er eine Vorrichtung (11) umfasst, die angepasst ist, um eine Dichtheitsprüfung in einem Volumen (36) zwischen dem Faltenbalg (1) und der Hilfseinheit (4) durchzuführen, wobei die Dichtheitsprüfung nach dem Übergang aus dem Ruhezustand in den Arbeitszustand durchgeführt werden soll.

12. Wartungsverfahren zur Wartung eines Kompensators (100) nach einem der Ansprüche 1 bis 11, umfassend mindestens einen Vorgang, um die Hilfseinheit (4) dicht mit der stromaufwärtigen (30) und der stromabwärtigen Manschette (31) zu verbinden, wobei der Vorgang *vor Ort* ausgeführt wird, ohne die stromaufwärtige Manschette (30) und die stromabwärtige Manschette (31) von der stromaufwärtigen Leitung (2) bzw. der stromabwärtigen Leitung (3) zu trennen.

13. Verfahren nach Anspruch 12, **dadurch gekennzeichnet, dass** der Hilfsfaltenbalg (5) nach dem Ausbau des Faltenbalgs (1) an dessen Stelle platziert wird.

14. Verfahren nach Anspruch 12, **dadurch gekennzeichnet, dass** der zweite Faltenbalg (5) durch Dehnung plastisch verformt, wenn die Hilfseinheit (4) aus dem Ruhezustand in den Arbeitszustand bewegt wird, um die Hilfseinheit (4) dicht mit der stromaufwärtigen Manschette (30) und der stromabwärtigen Manschette (31) zu verbinden.

15. Verfahren nach Anspruch 12, **dadurch gekennzeichnet, dass** während des Übergangs aus dem Ruhezustand in den Arbeitszustand und/oder danach ein Gas in einem Volumen (36) zirkuliert, das sich zwischen dem Faltenbalg (1) und der Hilfseinheit (4) befindet, um eine oder mehrere der folgenden Funktionen auszuführen:
- Spülen des Volumens (36),
- Evakuieren gefährlicher Gase, die in diesem Volumen (36) vorhanden sein können,
- Inertisieren des Volumens (36),
- Begrenzen des Durchflusses von Prozessflüssigkeit in das Volumen (36), und
- Abkühlen der das Volumen (36) begrenzenden Teile, die beim Übergang aus dem Ruhezustand in den Arbeitszustand erwärmt werden können.

## Claims

1. A compensator (100) comprising:
- an upstream sleeve (30) configured for being connected in a sealed manner to an upstream pipe (2),
- a downstream sleeve (31) configured for being connected in a sealed manner to a downstream pipe (3),
- a bellows (1) connecting, in a sealed manner, the upstream sleeve (30) and the downstream sleeve (31),
**characterized in that** the compensator (100) further comprises a backup assembly (4) comprising a backup bellows (5), the backup assembly (4) being suitable for switching from a rest state, in which the backup assembly (4) is not sealingly connected to at least one of the upstream sleeve (30) and the downstream sleeve (31), to an operating state, in which the backup assembly (4) is sealingly connected to the upstream sleeve (30) and to the downstream sleeve (31).

2. The compensator (100) according to claim 1, wherein the backup assembly (4) is suitable for going from the rest state to the operating state after a maintenance operation done *in situ,* during which the upstream sleeve (30) and the downstream sleeve (31) are intended to remain sealingly connected respectively to the upstream pipe (2) and to the downstream pipe (3).

3. The compensator (100) according to claim 1 or 2, **characterized in that**, in the rest state, the backup assembly (4) is sealingly connected to any single one of the upstream sleeve (30) and the downstream sleeve (31).

4. The compensator (100) according to claim 1, **characterized in that**, between the rest state and the operating state of the backup assembly (4), the backup bellows (5) occupies two separate positions relative to the upstream sleeve (30) and the downstream sleeve (31).

5. The compensator (100) according to claim 1, **characterized in that** the backup bellows (5) is suitable for experiencing a plastic deformation by extension during the passage of the backup assembly (4) from the rest state to the operating state.

6. The compensator (100) according to claim 5, further comprising at least one connection point (16) making it possible to connect one or several mechanical devices (7, 40) to the compensator (100), the mechanical devices (7, 40) being intended to perform the plastic deformation of the backup bellows (5).

7. The compensator (100) according to claim 6, **characterized in that** the connection point (16) is positioned on the backup bellows (5).

8. The compensator (100) according to claim 1, **characterized in that** the backup assembly (4) comprises at least one moving element (8), the moving element (8) being movable between a first position relative to the upstream (30) and downstream (31) sleeves in the rest state, and a second position, occupied in the operating state and in which the moving element (8) connects the upstream sleeve (30) and the downstream sleeve (31).

9. The compensator (100) according to claim 8, **characterized in that** the moving element (8) is telescopic.

10. The compensator (100) according to claim 1, **characterized in that** it comprises at least one device (9) suitable for circulating a gas in a volume (36) located between the bellows (1) and the backup assembly (4), the circulation of the gas being intended to be done during the passage from the rest state to the operating state.

11. The compensator (100) according to claim 1, **characterized in that** it comprises a device (11) suitable for performing a sealing test in a volume (36) located between the bellows (1) and the backup assembly (4), the sealing test being intended to be done after going from the rest state to the operating state.

12. A maintenance method for maintaining a compensator (100) according to any one of claims 1 to 11, comprising at least one operation for connecting the backup assembly (4) in a sealed manner to the upstream sleeve (30) and to the downstream sleeve (31), the operation being done *in situ* without disconnecting the upstream sleeve (30) and the downstream sleeve (31) respectively from the upstream pipe (2) and the downstream pipe (3).

13. The method according to claim 12, **characterized in that** the backup bellows (5) is placed instead and in place of the bellows (1) after the latter is deposited.

14. The method according to claim 12, **characterized in that** the second bellows (5) is plastically deformed by extension during the passage of the backup assembly (4) from the rest state to the operating state in order to connect the backup assembly (4) sealingly to the upstream sleeve (30) and to the downstream sleeve (31).

15. The method according to claim 12, **characterized in that** a gas circulates in a volume (36) located between the bellows (1) and the backup assembly (4) during the passage from the rest state to the operating state and/or next, in order to perform one or several of the following functions:
- purge of the volume (36),
- discharge of dangerous gases that may be found in the volume (36),
- inerting the volume (36),
- limitation of the intake of process fluid in the volume (36), and
- cooling parts delimiting the volume (36), the parts being able to heat up during the passage from the rest state to the operating state.
